# EUROPÄISCHE PATENTANMELDUNG

(11) **EP 0 665 342 A1**
(43) Veröffentlichungstag der Anmeldung: **02.08.1995**
(21) Anmeldenummer: 95100508.1
(22) Anmeldetag: 16.01.1995
(51) Int. Cl.: E04B 1/76, E04D 15/07, B65G 53/16, B65G 53/46

(54) **Verfahren und Vorrichtung zum Eintragen von granulatförmigen oder wolleartigen Dämmaterialien an Baustellen**

(30) Priorität: 28.01.1994 DE 4402568
(71) Anmelder: Gatt, Josef, A-6114 Weer (AT)
(72) Erfinder: Gatt, Josef, A-6114 Weer (AT)
(74) Vertreter: Betten & Resch

(57) **Zusammenfassung**

Zum Eintragen von granulatförmigen Dämmaterialien wie insbesondere Perliten oder von wollartigen Dämmaterialien wird das Dämmaterial (12) über eine Schleuse (18) einer Förderleitung (14) zugeführt und entlang dieser Förderleitung pneumatisch gefördert. Innerhalb der Förderleitung (14) wird das Dämmaterial mit flüssigem Klebstoff wie insbesondere Wasserglas besprüht. Das so behandelte Dämmaterial wird anschließend über einen langen Schlauch (58) am gewünschten Ort der Baustelle ausgetragen. Hierdurch wird beim Austragen die Staubbildung drastisch reduziert und der Materialverlust wird erheblich vermindert.

## Beschreibung

Die Erfindung betrifft ein Verfahren zum Eintragen von granulatförmigen und/oder wolle- bzw. faserartigen Dämmaterialien in Dämmaterialien aufnehmende Räume an Baustellen.

Bei solchen Dämmaterialien handelt es sich insbesondere um Perlite (Puffperlit), aber auch andere Dämmaterialien wie Korkgranulat oder Vermiculite. Solche Perlite sind z.B. unter dem Warenzeichen "Thermo-Fill" im Handel und haben eine Rohdichte von etwa 80 bis 100 kg/m³. Sie sind unbrennbar, witterungsbeständig, faulen und schimmeln nicht und eignen sich im Baugewerbe insbesondere zur Temperatur- und Schallisolierung, Anwendungsgebiete sind beispielsweise die Isolierung von Kesseln, Tanks, Badewannen, Rohrleitungen, Dächern u. dgl..

Das Dämmaterial ist relativ spröde und brüchig und daher ergeben sich letztlich aufgrund der Handhabung des Materials vergleichsweise hohe Materialverluste, die bis zu 30% betragen können. Weiterhin von Nachteil ist, daß das Arbeiten mit Perliten vor Ort aufgrund der äußerst starken Staubentwicklung sehr unangenehm und gesundheitsschädigend ist. Schließlich ist es mühsam und zeitaufwendig, wenn die Dämmaterialien auf der Baustelle sackweise zum jeweiligen Einsatzort gebracht werden müssen.

Der Erfindung liegt daher in erster Linie die Aufgabe zugrunde, ein Verfahren und eine Vorrichtung anzugeben, das bzw. die es ermöglicht, das Eintragen der Dämmaterialien in den vorgesehenen Eintragungsort zu erleichtern. Weiterhin soll insbesondere im Falle der Verwendung von Perliten der Materialverlust reduziert und die Staubentwicklung vermindert werden.

Diese Aufgabe wird hinsichtlich des Verfahrens im wesentlichen dadurch gelöst, daß die Dämmaterialien in eine Förderleitung dosiert eingeschleust werden, daß die Dämmaterialien entlang der Förderleitung pneumatisch gefördert werden, daß die Dämmaterialien in Förderrichtung gesehen vor und/oder nach der Einschleusstelle in der Förderleitung insbesondere mit Klebstoff besprüht werden, und daß die so besprühten Dämmaterialien anschließend über einen Schlauch pneumatisch bis zu dem Eintragungsort gefördert werden.

Hinsichtlich der Vorrichtung wird die Aufgabe im wesentlichen gelöst durch eine Förderleitung, einen Kompressor zum Zuführen von Druckluft zu der Förderleitung, eine Aufnahmeeinrichtung zur Aufnahme von Dämmaterialien, eine mit der Förderleitung in Verbindung stehende, motorisch angetriebene Schleuseneinrichtung zum dosierten Zuführen der Dämmaterialien aus der Aufnahmeeinrichtung zu der Förderleitung, eine (Klebstoff-)Besprühungseinrichtung mit mindestens einer in Förderrichtung des Dämmaterials gesehen vor oder nach der Schleuseneinrichtung an der Förderleitung angeordneten Sprühdüse zum Einsprühen insbesondere von Klebstoff in die Förderleitung, und einen in Förderrichtung gesehen an die Förderleitung anschließenden flexiblen Schlauch zum Austragen des besprühten Dämmaterials und zum Zuführen des Dämmaterials zum Eintragungsort.

Aufgrund der Besprühung des Dämmaterials mit Klebstoff in der Förderleitung wird staubförmiges Material zum größten Teil gebunden und wieder zu granulatförmigem Material geformt. Hierdurch wird die Staubentwicklung am Austragungsort entscheidend reduziert, wodurch die Arbeitsbedingungen ganz erheblich verbessert werden. Aufgrund des dem granulatförmigen Dämmaterial anhaftenden Klebers erhält das Dämmaterial zudem nach dem Austragen eine gewisse Standfestigkeit, nachdem der Klebstoff die einzelnen Körnchen bzw. Fasern des Dämmaterials miteinander verbindet.

Aufgrund der Besprühung der Dämmaterialien mit Klebstoff kann der Klebstoff äußerst sparsam verwendet werden, vorzugsweise werden pro Kubikmeter gefördertem Dämmaterial 0,1 bis 10 Liter, insbesondere 0,5 bis 2 Liter eingespritzt.

Diese sparsame Verwendung von Klebstoff ist zum einen kostengünstig und stellt zum anderen sicher, daß das ausgetragene Dämmaterial schnell trocknet.

Ein wesentlicher Vorteil der vorliegenden Erfindung besteht auch darin, daß die Vorrichtung beispielsweise vor der Baustelle installiert werden kann. Die Erfindung ermöglicht lange Förderstrecken von an die 100 Meter. Bei Verwendung eines entsprechend langen Schlauches sind in der Regel somit sämtliche Eintragungsorte auf der Baustelle erreichbar, ohne daß die vor der Baustelle installierte Vorrichtung bewegt werden müßte.

Die Erfindung kann mit Vorteil auch im Zusammenhang mit wolleartigen Dämmaterialien wie Baumwolle, Schafwolle, Kokoswolle, synthetischer Wolle u. dgl. bzw. mit Fasermaterialien einschließlich Papierfasern verwendet werden.

Es hat sich gezeigt, daß eine besonders effektive Besprühung des Dämmaterials dann möglich ist, wenn in bevorzugter Weiterbildung der Erfindung die in der Förderleitung befindliche Druckluft zumindest abschnittsweise in Drall versetzt bzw. umgelenkt wird bzw. wenn die in der Förderleitung befindlichen Dämmaterialien insbesondere über die in Drall versetzte Druckluft zumindest im Bereich ihrer (Klebstoff-)Besprühung in Drall versetzt bzw. umgelenkt werden. Zu diesem Zweck werden die Dämmaterialien im Bereich ihrer (Klebstoff-)Besprühung vorzugsweise entlang gekrümmter Förderwege geführt.

Die Klebstoff-Besprühung erfolgt vorzugweise in mindestens zwei Stufen, so daß die Dämmaterialien an mindestens zwei in Förderrichtung voneinander beabstandeten Sprühbereichen mit Klebstoff besprüht werden. Als vorteilhaft hat sich hierbei herausgestellt, wenn die Besprühungsrichtung in den mindestens zwei Sprühbereichen jeweils unterschiedlich ist, insbesondere, wenn sich die Besprühungsrichtungen, in einer Ebene senkrecht zur Förderrichtung gesehen, jeweils um 45° bis 135°, vorzugsweise um etwa 90° unterscheiden.

Gute Ergebnisse wurden bei einer bevorzugten Konfiguration erzielt, bei der der gekrümmte Bereich der Förderleitung einen Krümmungsabschnitt mit mindestens zwei gegensinnig verlaufenden Krümmungsunterabschnitten der Förderleitung aufweist und eine erste Sprühdüse am ersten, in Förderrichtung gesehen hinten liegenden Krümmungsunterabschnitt und vorzugsweise an dessen hinten liegenden Hälfte und an der dem Krümmungsmittelpunkt des ersten Krümmungsunterabschnitts abgewandten Seite der Förderleitung angeordnet ist und eine zweite Sprühdüse in etwa in der Mitte des zweiten Krümmungsunterabschnitts und vorzugsweise etwa senkrecht zur Krümmungsebene des zweiten Krümmungsunterabschnitts angeordnet ist. In diesem Fall sorgt die erste Sprühdüse in erster Linie für die Besprühung des groben, granulatförmigen Materials und die zweite, hierzu im wesentlichen senkrecht angeordnete Sprühdüse für die Besprühung des feinen, staubförmigen Materials.

Zusätzlich kann gemäß einem weiteren Merkmal der Erfindung eine dritte Sprühdüse am Ende des zweiten Krümmungsunterabschnitts angeordnet sein, die bei Bedarf zur weiteren Optimierung der Besprühung aktiviert werden kann.

Als vorteilhaft hat sich weiterhin erwiesen, wenn die Dämmaterialien gemäß einem weiteren Merkmal der Erfindung in die Förderleitung quasi-kontinuierlich oder portionsweise eingeschleust werden, was durch eine geeignete Auswahl der zu verwendenden Schleuse (Zellraddurchblasschleuse) bewerkstelligt werden kann. Es wird angenommen, daß sich aufgrund der quasi-kontinuierlichen Einschleusung der Dämmaterialien in die Förderleitung zwischen den einzelnen Dämmaterialpaketen Luftpolster bilden, welche die wirksame Förderung der Dämmaterialen begünstigen. Der Förderdruck für die Dämmaterialien liegt vorzugsweise zwischen 1 und 2 bar, insbesondere zwischen 1,4 und 1,8 bar.

Als geeigneter Klebstoff kommt in erster Linie Wasserglas in Betracht, beispielsweise Natron- oder Kali-Wasserglas; es können jedoch auch Kleister wie Tapetenkleister verwendet werden oder chemische Kleber.

Das erfindungsgemäße Verfahren und die erfindungsgemäße Vorrichtung eignen sich auch sehr gut zur Verwendung in Zusammenhang mit bituminiertem Dämmmaterial; allerdings wird in diesem Fall anstelle eines Klebers ein Bitumen- anlösendes Mittel, insbesondere ein dieselölhaltiges Mittel, eingesprüht. Hierdurch löst sich das Bitumen teilweise auf und verfestigt sich nach dem Eintragen am Eintragungsort wieder. Das verfestigte, bituminierte Dämmaterial hat dann eine Druckfestigkeit von etwa 5000 kg/m³.

Es hat sich gezeigt, daß selbst zementhaltige Stoffe in der erfindungsgemäßen Anlage mit Vorteil bearbeitet bzw. gefördert werden können.

Die Aufnahmeeinrichtung der erfindungsgemäßen Vorrichtung wird vorzugsweise von einem Aufnahmetrichter gebildet, der auf die Schleuseneinrichtung aufsetzbar ist. Der Trichter ist beispielsweise so dimensioniert, daß er den Inhalt von etwa einem Sack an Dämmaterial aufnehmen kann. Sofern eine Siloanlage zur Verfüung steht, kann die erfindungsgemäße Vorrichtung auch unter den Silo gefahren werden und direkt befüllt werden.

Aufgrund des geringen Gewichts der verwendeten Dämmaterialien besteht die Gefahr, daß aufgrund von durch die Schleuseneinrichtung nach außen entweichender Druckluft das im Aufnahmetrichter befindliche Dämmaterial angehoben und aus dem Aufnahmetrichter geschleudert wird. Um dies zu vermeiden, ist in bevorzugter Weiterbildung der Erfindung vorgesehen, daß das Gehäuse der Schleuse eine Gehäuse-Entlüftung aufweist, so daß die durch die Schleuse austretende Druckluft nicht mehr über den Aufnahmetrichter entweicht.

Die Gehäuse-Entlüftung, die an sich bekannt ist, ist allerdings auf derjenigen Seite der Rotorblätter vorgesehen, auf der die Rotorblätter leer sind, also ihren Inhalt bereits in die Förderleitung abgegeben haben. Es entweicht jedoch auch Druckluft auf der gegenüberliegenden Seite, also entgegen der Bewegungsrichtung der Schleusenblätter. Dies führt dann nach wie vor zu dem im vorhergehenden Absatz geschilderten Problem des Herausschleuderns von Dämmaterial aus dem Aufnahmetrichter. Es ist daher in besonders bevorzugter Weiterbildung der Erfindung eine Leckluft-Sammeleinrichtung vorgesehen, die zwischen dem Schleusengehäuse und dem Aufnahmetrichter angeordnet ist und insbesondere die entgegen der Bewegungsrichtung der Schleusenblätter entweichende Leckluft vorzugsweise über einen kleinen Spalt aufnimmt und nach außen abgibt. Somit wird im Aufnahmetrichter im wesentlichen keine Leckluft mehr nach oben steigen.

Des weiteren hat sich als vorteilhaft erwiesen, wenn in bevorzugter Weiterbildung der Erfindung der Schlauch-Innendurchmesser geringer ist als der Rohrleitungs-Innendurchmesser und im Übergangsbereich zwischen Rohrleitung und Schlauch ein Reduktionselement mit insbesondere konischer Innenfläche zum allmählichen Vermindern des Durchmessers vom Rohrleitungsdurchmesser auf den Schlauchdurchmesser angeordnet ist. Das Reduktionselement lenkt das geförderte Dämmaterial beim Eintritt in den Schlauch in Richtung zur Schlauchmitte ab und es hat sich gezeigt, daß hierdurch Verstopfungen im Schlauch vermieden werden können. Bei einem bevorzugten Ausführungsbeispiel weist die Förderleitung einen Innendurchmesser von 60 mm und der Schlauch einen Innendurchmesser von 40 mm auf.

Der Kompressor wird hierbei vorzugsweise bei einer Leistung von etwa 100 m³ Luft/Stunde (für Granulat) bzw. bis zu 400 m³ Luft/Stunde (für wollartige Dämmstoffe) betrieben und die Schleuse mit einer Leistung von etwa 4 - 4,5 m³ Dämmaterial/Stunde.

Gemäß einem weiteren, besonders vorteilhaften Merkmal der Erfindung weist die Vorrichtung weiterhin eine Steuervorrichtung zum Steuern des Betriebes des Antriebsmotors der Schleuseneinrichtung, zum Steuern des Betriebes einer Förderpumpe für die Klebstoff-Besprühungseinrichtung und zum Steuern des Betriebes des Kompressors auf und es ist eine Fernsteuereinrichtung für die Steuervorrichtung vorgesehen zum Fernsteuern zumindest des Betriebes des Antriebsmotors der Schleuseneinrichtung und der Förderpumpe für die Klebstoff-Besprühungseinrichtung, vorzugsweise auch zum Betrieb des Kompressors. Auf diese Weise ist der Betrieb der erfindungsgemäßen Vorrichtung von derjenigen Person, die am Schlauchende irgendwo auf der Baustelle das Dämmaterial am vorgesehenen Anwendungsort einbringt, steuerbar; insbesondere kann diese Person die Anlage ein- und ausschalten.

Weitere vorteilhafte Merkmale der Erfindung ergeben sich aus den übrigen Unteransprüchen sowie aus der nachfolgenden Beschreibung, in der mehrere Ausführungsbeispiele der Erfindung anhand der Zeichnung näher beschrieben werden. In der Zeichnung zeigen in halb-schematischer bzw. schematischer Darstellung:
- Figur 1: eine schematische Gesamtdarstellung der erfindungsgemäßen Vorrichtung,
- Figur 2a: eine Seitenansicht auf eine alternative Ausbildung eines Abschnitts der Förderleitung, gesehen in Richtung des Pfeiles II in Figur 1,
- Figur 2b: eine Draufsicht auf den Abschnitt der Förderleitung gemäß Figur 2a,
- Figur 3: den Verbindungsbereich zwischen Förderleitung und Schlauch,
- Figur 4: einen Schnitt durch die erfindungsgemäße Leckluft-Sammeleinrichtung einschließlich eines Teils der Schleuseneinrichtung und des Aufnahmetrichters, und zwar in einer Ebene senkrecht zur Darstellung gemäß Figur 1,
- Figur 5: eine schematische Teil-Darstellung einer alternativen Ausbildung der erfindungsgemäßen Vorrichtung, und
- Figur 6: eine schmematische Skizze einer alternativen Ausgestaltung der Vorrichtung bei Verweundung von wollartigen Dämmaterialien.

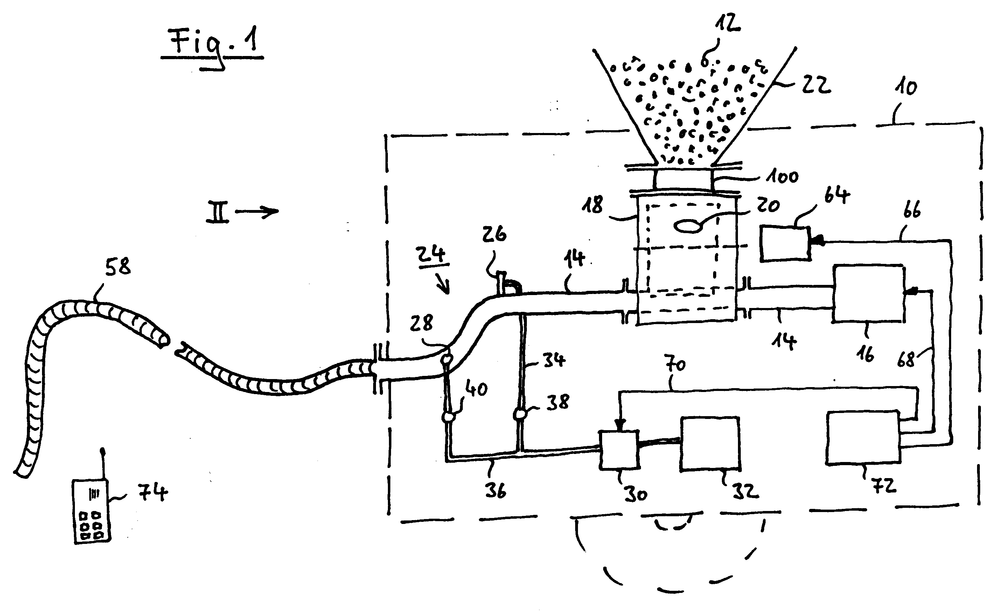

In Figur 1, welche das Gesamtsystem schematisch darstellt, ist mit der Bezugsziffer 10 ein gegebenenfalls fahrbares Gehäuse bezeichnet, in dem die Vorrichtung im wesentlichen untergebracht ist. Das Gehäuse 10 kann beispielsweise als KFZ-Anhänger ausgebildet sein, so daß die Vorrichtung bequem zur Baustelle transportiert werden kann.

Eine im Gehäuse ortsfest angeordnete Förderleitung für das granulatförmige Dämmaterial 12 ist insgesamt mit der Bezugsziffer 14 bezeichnet. Ein Kompressor 16 wird für eine Förderleistung von 100 m³ mit 1,5 bis 1,7 bar bei granulatförmigen Materialien und bei wollartigen bzw. faserartigen Dämmstoffen mit einer Förderleistung von bis zu 400 m³ mit 0,6 bar verwendet. Die Förderleitung 14 hat einen Innendurchmesser von 60 mm.

Oberhalb der Förderleitung 14 ist eine motorisch betriebene Durchblasschleuse 18 angeordnet, im Falle des konkreten Ausführungsbeispiels eine Schleuse der Firma DMN-Westinghouse, Typ DMN BL 150/Ausf. I. Die Schleuse 18 wird mit einer Dosierleistung von etwa 4 - 4,5 m³ Dämmaterial/Stunde betrieben. Die Rotorblätter werden in Stahl 10 mm oder Vulkollan-Blätter in der Stärke von 6 mm oder Federstahl in Kombination mit einem vulkanisierten Gehäuse eingesetzt. Das Schleusengehäuse weist eine Entlüftungsöffnung 20 auf, über die aus der Förderleitung 14 durch die Schleuse 18 in Bewegungsrichtung der Schleusenblätter entweichende Druckluft entlüftet wird.

Oberhalb der Schleuse 18 ist ein Trichter 22 angeordnet, in den das granulatförmige Dämmaterial, im Falle des konkreten Ausführungsbeispiels insbesondere Perlite, eingefüllt wird. Im Betrieb der Vorrichtung fällt das Dämmaterial 12 aufgrund der Schwerkraft in die Schleuse 18 bzw. zwischen die von den Rotorblättern der Schleuse gebildeten Förderräume und wird aufgrund der Umdrehung des Rotors quasi-kontinuierlich der Förderleitung 14 zugeführt.

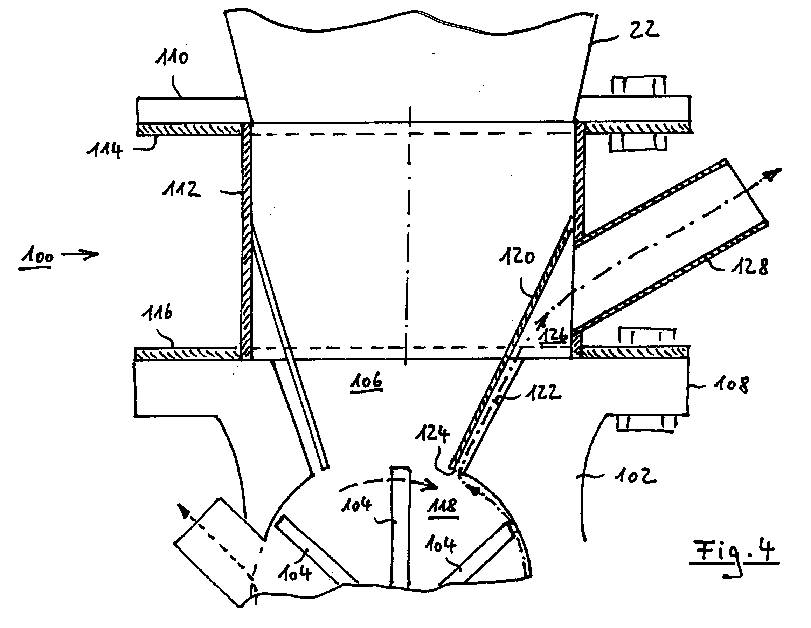

Zwischen der Schleuse 18 und dem Trichter 22 ist eine Leckluft-Sammeleinrichtung 100 angeordnet, die vom Förderkanal über die Schleuse entgegen der Bewegungsrichtung der Schleusenblätter entweichende Leckluft aufnimmt und nach außen abführt. Zur Beschreibung der Leckluft-Sammeleinrichtung wird auf Figur 4 Bezug genommen. In dieser Figur ist das Schleusengehäuse mit der Bezugsziffer 102, die in Pfeilrichtung rotierenden Schleusenblätter mit 104, die Entlüftungsöffnung mit 20, die obere Gehäuse-Eintrittsöffnung mit 106 und der obere Gehäuse-Anschlußflansch mit 108 bezeichnet. Der Trichter 22 weist einen unteren Anschlußflansch 110 auf. Die Leckluft-Sammeleinrichtung 100 umfaßt ein zylindrisches Gehäuse 112 mit einem oberen und einem unteren Anschlußflansch 114 bzw. 116. Der untere Anschlußflansch 116 ist mit dem Anschlußflansch 108 des Schleusengehäuses 102 und der obere Anschlußflansch 114 mit dem Anschlußflansch 110 des Trichters verschraubt. Das zylindrische Gehäuse 112 definiert eine Durchgangsöffnung, welche den Trichter 22 mit dem Förderraum 118 des Schleusengehäuses 102 verbindet. Ein Führungsblech 120 ist an der Innenseite des Gehäuses 112 angeschweißt und erstreckt sich unter konischer Verjüngung nach unten in das Schleusen-Gehäuse 102 hinein bis in die Nähe des Förderraums 118, und zwar unter Einhaltung eines Abstandes zwischen der ebenfalls konisch verlaufenden Wandung 122 der Gehäuse-Eintrittsöffnung 106. Hierdurch wird ein schmaler Spalt 124 gebildet, durch den entgegen der Drehrichtung der Schleusenblätter 104 entweichende Druckluft entweichen kann, wie dies durch die strichpunktierte Linie angedeutet ist. Aus dem ringförmigen Raum 126, der durch das Gehäuse 112, das Führungsblech 120 und den Anschlußflansch 108 gebildet ist, kann die Leckluft über einen Rohrstutzen 128 entweichen. Etwa über den Spalt 124 zusammen mit der Leckluft austretendes Dämmaterial kann nach Austritt aus dem Rohrstutzen aufgefangen und in geeigneter Weise wieder dem Trichter zugeführt werden. Die erfindungsgemäße Leckluft-Sammeleinrichtung ist auch unabhängig von der hier im übrigen beschriebenen Vorrichtung mit Vorteil einsetzbar.

Es wird nunmehr wieder auf Figur 1 Bezug genommen. Die Förderleitung 14 weist in Förderrichtung gesehen hinter der Schleuse 18 einen gekrümmten Bereich 24 auf, der im Falle des Ausführungsbeispiels gemäß Figur 1 zwei gegensinnig verlaufende Krümmungsunterabschnitte umfaßt. Eine erste Sprühdüse 26 ist im Bereich der ersten Krümmung angeordnet und eine zweite Sprühdüse 28 im Bereich der zweiten Krümmung. Über die Sprühdüsen 26, 28 wird ein flüssiger Klebstoff, im Falle des beschriebenen Ausführungsbeispiels Wasserglas, unter einem Druck von etwa 5,5 bar in das Innere der Förderleitung 14 eingesprüht. Die Sprühdüsen weisen einen relativ großen Sprühwinkel auf, der vorzugsweise größer als 60° ist (zwischen 60° und 90°), und sie sind als Ringdüsen ausgebildet. Die Sprühdüsen 26 und 28 sind, in der Zeichenebene gesehen, senkrecht zueinander angeordnet, Mittels einer Kreiselpumpe 30 wird der flüssige Klebstoff von einem Vorratsbehälter 32 über Zuführleitungen 34, 36 den Sprühdüsen 26, 28 zugeführt. Mittels Ventilen 38, 40 ist die Sprühleistung einer jeden Sprühdüse individuell einstellbar.

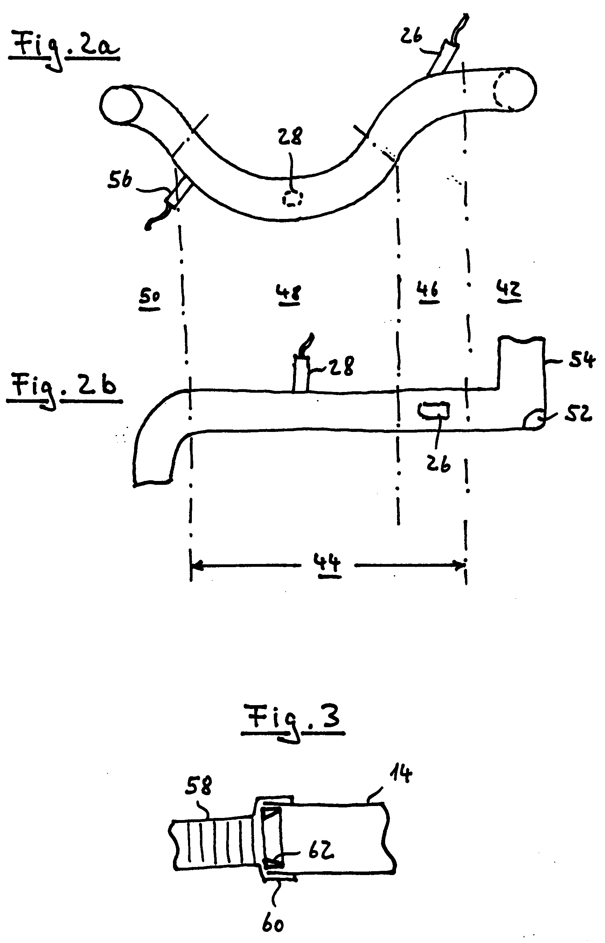

Eine weitere Ausführungsform des in Förderrichtung gesehen an die Schleuse 18 anschließenden Abschnitts der Förderleitung 14 ist in den Figuren 2a und 2b dargestellt. Dieser Abschnitt der Förderleitung umfaßt einen ersten Krümmungsabschnitt 42, der horizontal angeordnet ist und als 90°-Winkel ausgebildet ist. Im außenliegenden Eckbereich des 90°-Winkels ist ein sich in horizontaler Ebene erstreckendes Blättchen 52 befestigt, welches die Luftströmung teilt und sich als strömungstechnisch günstig erwiesen hat. An den ersten Krümmungsabschnitt 42 schließt sich ein zweiter Krümmungsabschnitt 44 an, in welchem die Förderleitung in einer im wesentlichen vertikalen Ebene gekrümmt ist. Der zweite Krümmungsabschnitt 44 umfaßt zwei gegenläufig gekrümmte Unterabschnitte 46 und 48. Während der Unterabschnitt 46 um etwa 45° nach unten gekrümmt ist, ist der Unterabschnitt 48 gegenläufig um etwa 90° nach oben gekrümmt. An den zweiten Krümmungsabschnitt 44 schließt sich ein dritter Krümmungsabschnitt 50 an, der wiederum gegenläufig zum Unterabschnitt 48 gekrümmt ist und zusätzlich in eine Richtung entgegengesetzt zur Richtung des Pfeiles II gemäß Figur 1, derart, daß das Ende des dritten Krümmungsabschnitts 50 parallel ausgerichtet ist zum Schenkel 54 des Winkels 42.

Die Sprühdüsen der Klebstoff-Besprühungseinrichtung sind im Krümmungsbereich der Förderleitung, insbesondere im zweiten Krümmungsabschnitt 44 angeordnet. Eine erste Sprühdüse 26 ist am ersten Unterabschnitt 46 angeordnet und zwar an dessen in Förderrichtung gesehen hinten liegender Hälfte. Die Sprühdüse 26 ist auf der obenliegenden Seite des Unterabschnitts 46 angeordnet und gegenüber der Vertikalen derart geneigt, daß sie in der Darstellung gemäß Figur 2a nach links unten, d.h. mit einer Neigungskomponente in Richtung des vorne liegenden Endes des ersten Krümmungsunterabschnitts sprüht. Die zweite Sprühdüse 28 ist etwa in der Mitte des zweiten Unterabschnitts 48 angeordnet und im wesentlichen horizontal und radial zur Achse der Förderleitung ausgerichtet. Eine dritte Sprühdüse 56 ist am vorneliegenden Endbereich des zweiten Unterabschnitts 48 angeordnet, und zwar an dessen untenliegender Seite und im wesentlichen radial zur Achse der Förderleitung. Während die Sprühdüsen 26, 28 beim Betrieb der Anlage in der Regel stets aktiviert sind, ist die Besprühung durch die Sprühdüse 56 je nach Ausgangsmaterial selektiv zuschaltbar.

Es wird nun wiederum auf Figur 1 Bezug genommen. An dem dem Kompressor 16 entgegengesetzten Ende der Förderleitung 14 ist ein flexibler Schlauch 58 anflanschbar, dessen Innendurchmesser vorzugsweise kleiner ist als der Innendurchmesser der Förderleitung 14. Im Falle des bevorzugten Ausführungsbeispiels beträgt der Schlauch-Innendurchmesser 40 mm. Im Kopplungsstück 60 des Schlauches 58 ist ein ringförmiges Reduktionselement 62 mit sich zum Schlauch hin konisch verjüngendem Innendurchmesser angeordnet, welches das Dämmaterial zur Schlauchmitte hin ablenkt und dadurch ein Verstopfen des Schlauches vermeidet (vgl. Fig.3).

Der Schlauch hat zweckmäßigerweise eine Länge von über 20 Metern, um für den Benutzer ausreichend Bewegungsfreiheit zu schaffen. Es hat sich herausgestellt, daß Schlauchlängen bis zu 80 Metern problemlos verwendet werden können, wodurch in der Praxis sichergestellt ist, daß insbesondere bei kleineren Wohnhäusern wie Ein- oder Zwei-Familienhäusern sämtliche Bereiche der Baustelle bedient werden können, ohne daß die vor der Baustelle installierte Vorrichtung bewegt werden müßte.

Die einzelnen Aggregate der Vorrichtung können teils von Hand, teils elektrisch gesteuert werden. Insbesondere der Antriebsmotor 64 für die Schleuse 18, der Kompressor 16 und die Kreiselpumpe 30 für die Klebstoff-Besprühung werden über Leitungen 66, 68 und 70 mittels einer zentralen Steuervorrichtung 72 gesteuert, wobei selbstverständlich auch eine elektrische Steuerung beispielsweise für die Ventile der Sprühdüsen 26, 28 und 56 vorgesehen sein könnte. Über geeignete Meßwertaufnehmer könnte auch eine automatische Regelung der Anlage bewerkstelligt werden. Solche Weiterbildungen sind jedoch dem Fachmann geläufig und bedürfen daher hier keiner näheren Erörterung.

Die erfindungsgemäße Vorrichtung umfaßt weiterhin eine Fernbedienung 47, die es der am Ende des Schlauchs 58 befindlichen Bedienungsperson ermöglicht, bestimmte Funktionen der Steuervorrichtung 72 ein- und auszuschalten, so insbesondere den Betrieb des Antriebsmotors 64 für die Schleuse 18, die motorisch betriebene Kreiselpumpe 30 für den Klebstoff und den Kompressor 16. Der Kompressor 16 ist gegenüber dem Antriebsmotor 64 vorzugsweise mit einem gewissen Nachlauf abschaltbar, so daß sichergestellt ist, daß beim Abschalten der Anlage die Förderleitung 14 und der Schlauch 58 stets vollständig entleert sind.

Für die elektrische Versorgung der Anlage kann entweder ein Stromaggregat oder ein Netzanschluß vorgesehen sein.

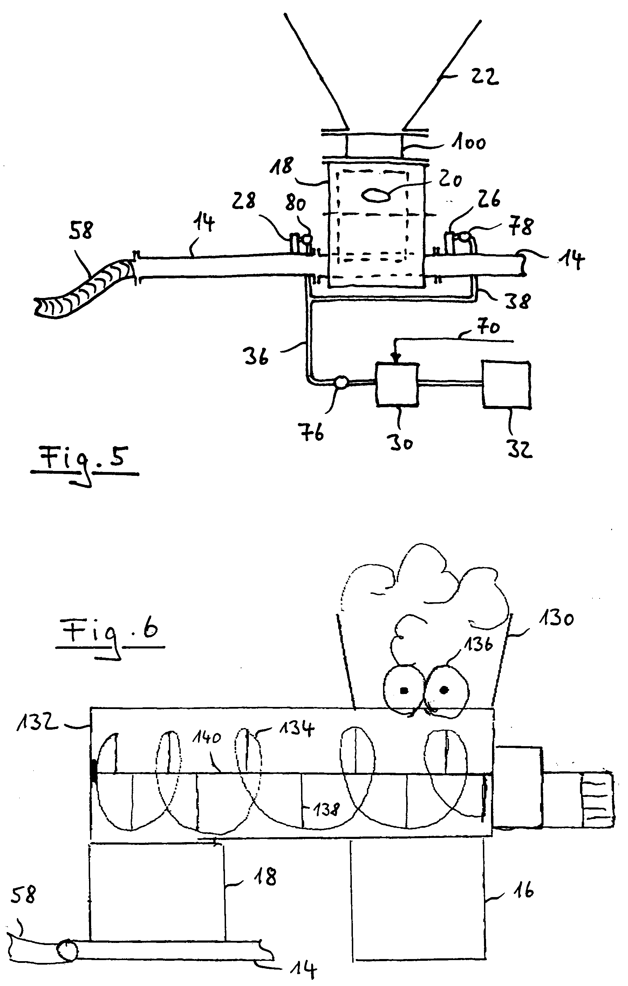

In Figur 5 ist ein weiteres, besonders bevorzugtes Ausführungsbeispiel schematisch dargestellt; die Darstellung entspricht im wesentlichen derjenigen gemäß Figur 1 und soweit in Figur 5 einzelne Komponenten nicht dargestellt sind, können diejenigen. gemäß Figur 1 Verwendung finden. Entsprechende Bezugsziffern werden für entsprechende Teile verwendet.

Beim Ausführungsbeispiel gemäß Figur 5 sind die Sprühdüsen 26, 28 nunmehr nahe der Schleuse 18 angeordnet. Insbesondere ist die Sprühdüse 26 in Förderrichtung gesehen vor der Schleuse 18, also an der Lufteintrittsseite der Zellraddurchblasschleuse angeordnet. Die Vorteile der Besprühung an der Lufteintrittsseite liegen darin, daß durch die Luft der Kleber besser verwirbelt und die Schleusenblätter besser entleert werden. Speziell bei bituminiertem Material wird ein Verstopfen der Rotorblätter mit Bitumen verhindert.

Eine weitere Sprühdüse 28 ist beim Luft- bzw. Materialaustritt der Zellraddurchblasschleuse 18 angeordnet und kann zusätzlich zur Sprühdüse 26 oder anstelle der Sprühdüse 26 aktiviert werden. Weiterhin ist im Falle des Ausführungsbeispieles gemäß Figur 5 die Förderleitung 14 nicht bzw. nicht wesentlich gekrümmt. Mit der Bezugsziffer 76 ist ein Regelventil und mit den Bezugsziffern 78, 80 jeweils ein elektrisches Magnetventil bezeichnet, welches gleichzeitig mit der Kreiselpumpe 30 geschaltet wird.

Figur 6 zeigt eine schematische Skizze einer speziell für die Verwendung von wollartigen Dämmstoffen ausgelegten Vorrichtung. Das im Aufnahmebehälter 130 befindliche Wollmaterial, welches gewaschene oder auch ungewaschene Schafwolle sein kann, wird mittels eines geeigneten Schneidgeräts 136 in Streifen von 0,5 - 3 cm, vorzugsweise von 1 - 2 cm geschnitten und mittels einer anschließenden Fördereinrichtung 132, die eine helixartige Spindel 134, die über radiale Stege 138 an der rotierenden Welle 140 befestigt ist, umfassen kann aufgemischt, d.h. weiter in die einzelnen Fasern oder Faserbündel zerlegt und der Durchblasschleuse 18 zugeführt.

Das Schneidgerät kann hierbei, wie dargestellt, mehrere sich gegenüberliegende, rotierende Messer umfassen. Entgegen der Darstellung gemäß Figur 6, wo die Fördereinrichtung 132 horizontal ausgerichtet ist, kann es zweckmäßig sein, die Fördereinrichtung 132 im wesentlichen vertikal auszurichten, wobei der Aufnahmebehälter 130 im wesentlichen oberhalb der Fördereinrichtung 132 angeordnet ist.

### Bezugszeichenliste

- 10: Gehäuse
- 12: Dämmaterial
- 14: Förderleitung
- 16: Kompressor
- 18: Schleuse
- 20: Entlüftungsöffnung
- 22: Trichter
- 24: gekrümmter Bereich
- 26: Sprühdüse
- 28: Sprühdüse
- 30: Kreiselpumpe
- 32: Vorratsbehälter
- 34: Zuführleitung
- 36: Zuführleitung
- 38: Ventil
- 40: Ventil
- 42: erster Krümmungsabschnitt
- 44: zweiter Krümmungsabschnitt
- 46: Unterabschnitt
- 48: Unterabschnitt
- 50: dritter Krümmungsabschnitt
- 52: Blättchen
- 54: Schenkel
- 56: Sprühdüse
- 58: Schlauch
- 60: Kopplungsstück
- 62: Reduktionselement
- 64: Antriebsmotor
- 66: Leitung
- 68: Leitung
- 70: Leitung
- 72: Steuervorrichtung
- 74: Fernbedienung
- 76: Regelventil
- 78: Magnetventil
- 80: Magnetventil
- 100: Leckluft-Sammeleinrichtung
- 102: Schleusen-Gehäuse
- 104: Schleusen-Blätter
- 106: Gehäuse-Eintrittsöffnung
- 108: Anschlußflansch
- 110: Anschlußflansch
- 112: Gehäusemantel
- 114: Oberer Anschlußflansch
- 116: Unterer Anschlußflansch
- 118: Förderraum
- 120: Führungsblech
- 122: Wandung
- 124: Spalt
- 126: Raum
- 128: Rohrstutzen
- 130: Aufnahmebehälter
- 132: Fördereinrichtung
- 134: Spindel
- 136: Schneidgerät
- 138: Stege
- 140: Welle

## Patentansprüche

1. Verfahren zum Eintragen von granulatförmigen Dämmaterialien in Dämmaterialien aufnehmende Räume an Baustellen, dadurch gekennzeichnet
- daß die Dämmaterialien in eine Förderleitung dosiert eingeschleust werden,
- daß die Dämmaterialien entlang der Förderleitung pneumatisch gefördert werden,
- daß die Dämmaterialien in Förderrichtung gesehen vor und/oder nach der Einschleusstelle in der Förderleitung insbesondere mittels Klebstoff besprüht werden, und
- daß die so besprühten Dämmaterialien anschließend über einen Schlauch pneumatisch bis zu dem Eintragungsort gefördert werden.

2. Verfahren nach Anspruch 1, dadurch gekennzeichnet, daß als Dämmaterialien Perlite (Puffperlit), Kork oder Vermikulite oder wollartige bzw. faserartige Dämmaterialien verwendet werden.

3. Vorrichtung zur Durchführung des Verfahrens nach einem der vorhergehenden Ansprüche, gekennzeichnet durch
- eine Förderleitung (14),
- einen Kompressor (16) zum Zuführen von Druckluft zu der Förderleitung (14),
- eine Aufnahmeeinrichtung (22) zur Aufnahme von Dämmaterialien (12),
- eine mit der Förderleitung (14) in Verbindung stehende, motorisch angetriebene Schleuseneinrichtung (18) zum dosierten Zuführen der Dämmaterialien aus der Aufnahmeeinrichtung (22) zu der Förderleitung (14),
- eine (Klebstoff-)Besprühungseinrichtung (26, 28, 30, 32, 34, 36, 38, 40, 56) mit mindestens einer in Förderrichtung des Dämmaterials gesehen vor oder nach der Schleuseneinrichtung (18) an der Förderleitung (14) angeordneten Sprühdüse (26, 28, 56) zum Einsprühen von Flüssigkeit, insbesondere Klebstoff in die Förderleitung (14),
- einen in Förderrichtung gesehen an die Förderleitung (14) anschließenden, flexiblen Schlauch (58) zum Austragen des besprühten Dämmaterials und Zuführen zum Eintragungsort.

4. Vorrichtung nach Anspruch 3, dadurch gekennzeichnet, daß die Schleuseneinrichtung (18) eine Zellraddurchblasschleuse ist.

5. Vorrichtung nach Anspruch 3 oder 4, dadurch gekennzeichnet, daß zumindest eine Sprühdüse (26) vor der Schleuseneinrichtung (18) angeordnet ist.

6. Vorrichtung nach einem der Ansprüche 3 bis 5, dadurch gekennzeichnet, daß das Gehäuse (102) der Schleuseneinrichtung (18) eingangsseitig mit einer Leckluft-Sammeleinrichtung (100) in Verbindung steht zum Aufnehmen und Abführen von Leckluft, die insbesondere entgegen der Bewegungsrichtung der Schleusenblätter (104) entweicht, wobei die Leckluft-Sammeleinrichtung (100) vorzugsweise zwischen der Schleuseneinrichtung (18) und der Aufnahmeeinrichtung (22) angeordnet ist.

7. Vorrichtung nach Anspruch 6, dadurch gekennzeichnet, daß die Leckluft-Sammeleinrichtung (100) ein an das Schleusen-Gehäuse (102) anflanschbares Gehäuse (112) aufweist, daß an der Innenseite des Gehäuses (112) ein sich zur Schleuseneinrichtung (18) hin verjüngendes Führungsblech (120) luftdicht befestigt ist, daß sich das Führungsblech (120) mit seinem freien Ende bis nahe zum Förderraum (118) der Schleuseneinrichtung (18) hin erstreckt, und daß zwischen einer Wandung (122) der Gehäuse-Eintrittsöffnung (106) des Schleusen- Gehäuses (102) und dem Führungsblech (120) ein Spalt (124) vorgesehen ist, durch den die Leckluft entweichen kann, wobei weiterhin vorzugsweise ein Rohrstutzen (128) am Gehäuse (112) der Leckluft-Sammeleinrichtung (100) befestigt ist, welcher einerseits mit dem Spalt (124) und andererseits mit der Außenumgebung in Verbindung steht.

8. Vorrichtung nach einem der Ansprüche 3 bis 7, dadurch gekennzeichnet, daß die Förderleitung (14) in Förderrichtung gesehen hinter der Schleuseneinrichtung (18) zumindest einen gekrümmten Bereich (24, 42, 44, 50) aufweist, der vorzugsweise einen Krümmungsabschnitt (42, 46, 48, 50) mit einer Krümmung der Förderleitung von mindestens 40° aufweist.

9. Vorrichtung nach Anspruch 8, dadurch gekennzeichnet, daß sich an einen Ausgangsabschnitt der Förderleitung (14), der sich an die Schleusenanrichtung (18) anschließt, ein erster Krümmungsabschnitt (42) mit einer Krümmung von etwa 90° anschließt, daß sich an diesen ersten Krümmungsabschnitt (42) ein zweiter Krümmungsabschnitt (44) anschließt, der in einer Ebene senkrecht zur Ebene des ersten Krümmungsabschnitts liegt, und daß sich an den zweiten Krümmungsabschnitt (44) ein dritter Krümmungsabschnitt (50) anschließt, wobei das Ende des dritten Krümmungsabschnitts (50) parallel ausgerichtet ist zum Ende des Ausgangsabschnitts.

10. Vorrichtung nach Anspruch 3 und 8, dadurch gekennzeichnet, daß mindestens eine Sprühdüse (26, 28, 56) im gekrümmten Bereich (24, 42, 44, 50) der Förderleitung (14) angeordnet ist, wobei die allgemeine Sprührichtung der Sprühdüse vorzugsweise in Förderrichtung geneigt ist.

11. Vorrichtung nach einem der Ansprüche 3 bis 10, dadurch gekennzeichnet, daß die Sprühdüsen (26, 28, 56) einen Sprühwinkel größer als 60° aufweisen und vorzugsweise als Ringdüsen ausgebildet sind.

12. Vorrichtung nach einem der Ansprüche 3 bis 11, weiterhin gekennzeichnet durch eine Steuervorrichtung (72) zum Steuern zumindest des Betriebes der Schleuseneinrichtung (18), des Betriebes einer Förderpumpe (30) für die Klebstoff-Besprühungseinrichtung und des Betriebes des Kompressors (16), und durch eine Fernsteuereinrichtung (74) für die Steuervorrichtung (72) zum Fernsteuern zumindest des Betriebes des Antriebsmotors (64) der Schleuseneinrichtung (18) und der Förderpumpe (30) für die Klebstoff-Besprühungseinrichtung.
